Europäisches Patentamt

European Patent Office

Office européen des brevets

(19)

(11) Numéro de publication : **0 340 132 B1**

## (12) FASCICULE DE BREVET EUROPEEN

(45) Date de publication du fascicule du brevet :
**07.10.92 Bulletin 92/41**

(51) Int. Cl.⁵ : **A23G 3/28, B65D 75/54, B65D 85/72, A21D 10/02**

(21) Numéro de dépôt : **89440026.6**

(22) Date de dépôt : **05.04.89**

(54) **Conditionnement pour produits visqueux.**

(30) Priorité : **29.04.88 FR 8806076**

(43) Date de publication de la demande :
**02.11.89 Bulletin 89/44**

(45) Mention de la délivrance du brevet :
**07.10.92 Bulletin 92/41**

(84) Etats contractants désignés :
**AT BE CH DE ES GB GR IT LI LU NL SE**

(56) Documents cités :
**DE-C- 170 008
DE-U- 8 622 147
FR-A- 612 059**

(56) Documents cités :
**FR-A- 1 110 491
FR-A- 2 608 565
GB-A- 2 186 260
NL-A- 8 104 919
US-A- 4 452 823**

(73) Titulaire : **Unilever N.V.
Burgemeester s'Jacobplein 1
NL-3015 CA Rotterdam (NL)**

(72) Inventeur : **Janik, Monique
16 Rue Marx Dormoy
F-59113 Seclin (FR)**

(74) Mandataire : **Sikken, Antonius H. J. M. et al
UNILEVER N.V., Patent Division, P.O. Box 137
NL-3130 AC Vlaardingen (NL)**

EP 0 340 132 B1

## Description

L'invention est relative à un article de conditionnement pour produits visqueux. Elle trouvera par exemple son application dans l'industrie alimentaire pour réaliser des emballages de sauces, mayonnaise, créme ou autre destinés à la restauration, collectivités, ou cuisines industrielles.

Bien que l'invention ait été tout spécialement développée pour la commercialisation de produits alimentaires, elle pourra parfaitement s'adapter à d'autres matières qui présentent une nature pâteuse, c'est-à-dire dont l'écoulement ne se réalise pas naturellement à travers un orifice de petite dimension.

Pour suivre l'exemple de la mayonnaise, qui actuellement fait l'objet de fabrications industrielles courantes, son conditionnement, se fait soit en tubes ou en pots. Pour les applications domestiques, le tube de petite capacité est préféré. Le tube est avantageux car son orifice de sortie peut être profilé afin que le filet de mayonnaise sortant du tube forme un filet décoratif. De la sorte, le tube peut directement être utilisé pour créer des ornements et garnir un plat.

L'utilisation de la garniture a titre décoratif se rencontre également avec la créme fraiche dont la structure se prête bien pour être mise en forme. Dans ce cas, la créme fraiche de fabrication industrielle est commercialisée sous forme de bombe aérosol dont le bec est profilé pour garnir directement les desserts.

Ces conditionnements sont bien adaptés pour des usages domestiques, par contre, lorsqu'il s'agit de restauration, de cuisines collectives, les quantités mises en jeu sont trop importantes pour être compatibles avec l'emploi de tubes. Aussi, les produits sont conditionnés dans des pots métalliques ou de verre. La refermeture du conditionnement n'est pas indispensable car, par définition, dans des applications professionnelles, la consommation est permanente et le pot est très rapidement vidé.

L'inconvénient majeur de ce type de récipient est qu'il ne permet pas d'obtenir directement un filet décoratif en sortie. Alors, le cuisinier doit avoir recours à un ustensile spécifique pour former des filets décoratifs de garniture des plats dans lequel le produit alimentaire doit être transvasé.

A ce sujet, on connait la poche à douille qui est formée d'un tronc de cône en tissu souple au sommet duquel on place une douille métallique. Le produit est disposé dans la poche et par pression avec les mains sur celle-ci, on injecte généralement le produit à travers la douille et on forme un filet décoratif en sortie pour orner des plats.

L'inconvénient de cet ustensile est qu'il faut, tout d'abord le remplir de produit, et qu'après usage, il faut le nettoyer. Par ailleurs, l'extrémité supérieure de la poche est ouverte et il faut une bonne dextérité pour parvenir a éviter les fuites par remontée de la créme.

On connait un autre ustensile qui est par exemple utilisé pour former des filets décoratifs de mayonnaise, et qui se présente sous la forme d'une grosse seringue apte à être garnie de produit. Par action sur un piston, on forme en sortie à travers un orifice profilé un filet décoratif.

L'inconvénient de cet ustensile est sa faible capacité, il doit par conséquent être fréquemment rechargé, en outre, après usage, il faut le nettoyer.

Le brevet français 2 608 565 décrit un conditionnement pour produit alimentaire comportant une poche jetable en matière synthétique, en forme triangulaire comportant une extrémité conique qui peut être coupée afin de produire un orifice de sortie pour le produit contenu dans cette poche, extrémité conique qui peut être munie d'une douille de sortie soit d'une façon intégrale avec la poche, se trouvant à l'extérieur de celle-ci, ou par la prévision d'une bague de fixation, dans laquelle on peut insérer une douille rigide après avoir coupé la pointe de l'extrémité conique.

Le but principal de la présente invention est de présenter un conditionnement pour produits visqueux qui permette d'obtenir directement un fin filet décoratif. Pour être compatible avec des applications industrielles, le conditionnement de la présente invention dispose d'une capacité modulable à la demande importante, telle que par exemple 1 à 4 litres.

Avant usage, le conditionnement de la présente invention est étanche et donc il peut servir pour des applications alimentaires voire même de conservation.

De par sa conception économique, le conditionnement de la présente invention est jetable après usage et rivalise avec les conditionnements traditionnels en pots.

Par ailleurs, le conditionnement de l'invention est très commode puisqu'il est prêt à l'emploi, ne nécessite aucun rechargement et l'étanchéité est directement assurée.

Selon l'invention, le conditionnement pour produit visqueux, qui trouvera notamment son application en matière de cuisines industrielles pour produits alimentaires, tels que mayonnaise, crème, sauces ou autres, destinés à être utilisés en filet décoratif, le dit conditionnement comprenant une poche étanche souple de rétention du produit visqueux, une douille destinée à l'écoulement et à la mise en forme du filet, caractérisé par le fait que la poche renferme la douille qui comporte des moyens de maintien en place a proximité de la zone à ouvrir de la poche.

L'invention sera mieux comprise à la lecture de la description suivante accompagnée de dessins en annexe parmi lesquels:

    – la figure 1 schématise l'emploi du conditionnement pour produit visqueux selon la présente invention,

    – la figure 2 représente, en vue de coupe, un mode préférentiel de réalisation du conditionnement pour produit visqueux selon la présente invention,

– la figure 3 illustre la douille d'écoulement et de mise en forme du produit.

– la figure 4 montre les moyens de maintien en place de la douille de la figure 3.

La présente invention vise un article de conditionnement pour produit visqueux.Elle trouvera notamment son application en matière de cuisine industrielle pour l'emballage de produits alimentaires tels que mayonnaise, crème ou sauces.

Lorsque la consistance de la sauce ou de la crème le permet, on la dispose en un filet décoratif pour agrémenter la présentation de certains plats. Les exemples typiques sont la mayonnaise et la crème fraiche dont la nature visqueuse se prête parfaitement a cette mise en forme.

Les ustensiles de décoration connus ne sont pas adaptés au conditionnement industriel du produit, la poche à douille est ouverte et la seringue trop coûteuse et dispose d'un volume trop réduit. Par conséquent, des manipulations préliminaires du produit doivent être effectuées pour charger ces ustensiles qui ne sont guère commodes. La présente invention se propose précisément d'apporter une solution à ce problème.

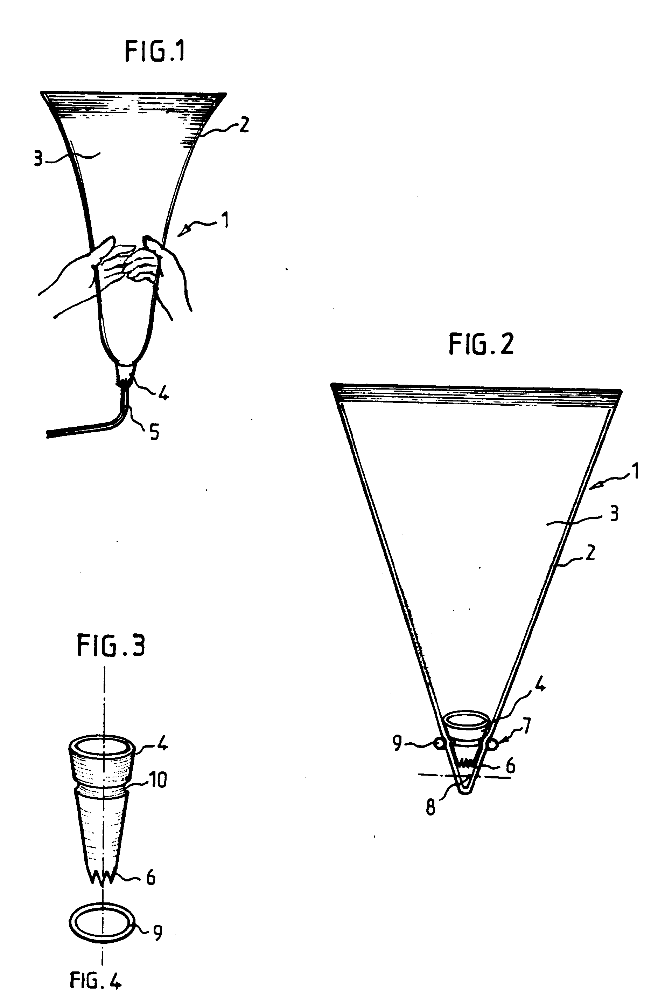

La figure 1 schématise l'utilisation très commode de l'article de conditionnement pour produit visqueux de la présente invention.

L'article 1 est formé d'une poche 2 dans laquelle le produit 3 est disposé. Il s'agit d'une poche étanche et souple dont la contenance peut aller jusqu'à 4 litres. Cette capacité est tout à fait adaptée aux besoins des cuisines de restauration collective. En outre, la poche étant étanche, il n'y a aucun risque de débordement ou de fuite comme cela se rencontre avec les poches à douille traditionnelles.

L'article 1 comprend également une douille 4 par laquelle le produit 3 est expulsé sous la forme d'un filet 5 décoratif. Pour cela, la douille présente un orifice profilé de forme quelconque. Les dimensions de l'orifice seront toutefois adaptées aux caractéristiques du produit à distribuer, ainsi, par exemple. l'orifice pour de la crème fraiche doit être de plus grande dimension que pour de la mayonnaise. Il s'agit cependant de variables qui sont connus de l'Homme de l'Art et qui dépendent également de l'effet décoratif recherché.

La poche 2 est confectionnée dans un matériau souple tel qu'un film de polyéthylène ou polypropylène, et pourra donc très facilement être comprimée par une pression manuelle. Cette pression provoque l'écoulement du produit à travers la douille 4. La paroi de la poche 2 sera, de préférence, plus fine que celle d'un tube ce qui facilite l'exercice d'une pression sur la poche.

Les dimensions de la poche 2 devront être telles qu'il ne se produise pas d'écoulement accidentel du produit 3 a travers la douille 4 en l'absence de pression volontaire sur la poche 2.

La figure 2 illustre un mode préférentiel de réalisation de l'article de conditionnement 1 de la présente invention en vue en coupe. La poche 2 confectionnée dans un film étanche et souple, est à l'origine entièrement fermée, pour retenir le produit visqueux 3 placé à l'intérieur. On pourra notamment utiliser tout film soudable simple ou complexe possédant les caractéristiques techniques assurant la conservation du produit conditionné tel que par exemple une poche en film de polyéthylène soude par ultra-sons, haute fréquence ou similaire.

La poche étant étanche et complètement fermée, les risques de contamination ou d'oxydation du produit sont écartés et la conservation est durable.

En outre, la poche 2 renferme une douille 4 qui possède un orifice 6 de sortie profilé. Ainsi, tout écoulement du produit 3 à travers la douille 4 formera un filet décoratif.

Selon une caractéristique de la présente invention, la douille 4, placée à l'intérieur de la poche 2, comporte des moyens 7 de maintien en place à proximité de la zone 8 à ouvrir de la poche 2. Par conséquent, bien que la douille 4 soit simplement placée à l'intérieur de la poche 2 lors du conditionnement du produit 3, la douille 4 ne peut pas se balader à l'intérieur de la poche 2, même avant l'ouverture de cette dernière.

Lorsque l'on veut utiliser le produit 3 sous forme de filet décoratif, il suffit de couper la poche 2 au niveau de la zone de coupe 8, repérée par exemple par pointillés sur la poche, de telle sorte que le produit 3 puisse s'écouler à l'extérieur de la poche 2 à travers la douille 4. Il s'agit du seul circuit de sortie pour le produit 3 qui, par conséquent, sera profilé au niveau de l'orifice 6 de sortie de la douille 4. Les dimensions de l'orifice 6 étant appropriées, l'écoulement du produit visqueux 3 sera déterminé par la pression exercée par l'opérateur sur la poche 2.

De préférence, la poche 2 est de profil cônique, ou tout au moins de forme cônique au niveau de l'orifice de sortie. La douille est située a l'extremité du cône.

Les moyens de maintien en place de la douille 4 et ses dimensions dans la poche 2 au niveau de l'orifice de sortie assurent également l'étanchéité entre la poche 2 et la douille 4. Il est impératif que le produit sortant de la poche filtre à travers la douille 4 et ne puisse contourner celle-ci.

On peut envisager à titre de moyen de maintien, l'utilisation d'une soudure a la périphérie de la douille pour fixer celle-ci sur la paroi de la poche 2. A cet égard, le matériau de la douille et la nature du film interne de la poche sont compatibles pour soudures aux ultra-sons, à haute fréquence, à la chaleur.

Selon une autre réalisation, les moyens de maintien 7 de la douille 4 dans la poche 2 sont extérieurs à la poche 2. Cette mise en oeuvre facilite la mise en place des moyens extérieurs. Par exemple, ces moyens de maintien 7 se présentent sous la forme d'une collerette 9 torique élastique qui coopère avec une gorge 10 réalisée sur le pourtour de la douille 4 tel que cela est illustré aux figures 3 et 4.

Ainsi, il suffit de placer la douille 4 dans le fond conique de la poche 2 puis d'enfiler la collerette torique 9 autour de l'extrémité de la poche 2 jusqu'à ce que celle-ci vienne se loger dans la gorge 10. La douille 4 est alors immobilisée par rapport à la poche 2. telle-ci pourra être remplie de produit 3 puis on procédera a la fermeture étanche de la poche 2 notamment par soudage du film plastique qui a servi à sa confection.

L'utilisateur doit seulement sectionner la zone 8 extrême de la poche 2 pour l'ouvrir et la rendre ainsi prête a l'emploi.

Pour faciliter l'ouverture de la poche 2 dans la zone de coupe 8, la poche 2 déborde légèrement à l'extrémité de la douille 4 telle qu'illustrée à la figure 2 afin que la poche 2 puisse être coupée a ce niveau a l'aide d'une paire de ciseaux.

On pourra également envisager de prévoir une deuxième gorge, non représentée sur les dessins, dans la douille 4, au-dessus de l'orifice 6, sensiblement parallèle à la première gorge 10, afin de permettre la découpe de la douille à cet endroit au moyen de tout objet tranchant.

Etant donné quel'article de conditionnement de l'invention a été développé dans le cadre d'une utilisation professionnelle, aucun moyen de fermeture de la poche 2 n'a pas été proposé, toutefois, si une telle exigence était requise, on pourrait parfaitement utiliser un bouchon ou tout autre moyen d'obturation qui serait placé au niveau de l'orifice 6 de la douille 4.

## Revendications

1. Article de conditionnement pour produits visqueux, qui trouvera notamment son application en matière de cuisine pour contenir des produits alimentaires tels que mayonnaise, crème, sauce ou autre, destinés à être utilisés en filet décoratif, le dit article comprenant une poche étanche (2) souple de rétention du produit visqueux (3) comportant une extrémité conique destinée à être ouverte par découpage, et une douille (4) destinée à l'ecoulement et à la mise en forme du filet (5), caractérisé par le fait que la douille (4) est placée à l'intérieur de l'extrémité de la poche (2) et en ce qu'elle est maintenue en place dans ladite extrémité par un moyen de maintien (7).

2. Article de conditionement pour produit visqueux selon la revendication 1, caractérisé par le fait que la poche (2) est de profil cônique et la douille (4) est située à l'extrémité du cône.

3. Article de conditionnement pour produit visqueux selon la revendication 1, caractérisé par le fait que l'intérieur de l'extrémité de la poche est en contact avec l'extérieur de la douille (4), afin de fermer hermétiquement l'endroit entre la douille et la poche.

4. Article de conditionnement pour produit visqueux selon la revendication 3, caractérisé par le fait que les moyens de maintien (7) se présentent sous la forme d'une soudure de liaison localisée à la périphérie de la douille (4) pour la fixer sur la paroi de la poche (2).

5. Article de conditionnement pour produit visqueux selon la revendication 1, caractérisé par le fait que les moyens de maintien (7) sont extérieurs à la poche (2).

6. Article de conditionnement pour produit visqueux selon la revendication 5, caractérisé par le fait que les moyens (7) de maintien se présentent sous la forme d'une collerette torique (9) élastique qui coopère avec une gorge (10) réalisée sur le pourtour de la douille (4).

## Patentansprüche

1. Gegenstand zum Bearbeiten von viskosen Produkten, für die hauptsächliche Anwendung im Bereich der Speisenzubereitung um Nahrungsprodukte zu beinhalten, wie Mayonnaise, Crème, Sosse und andere, welche zur Verwendung in dekorativen Streifen bestimmt sind, wobei der genannte Gegenstand eine weiche dichte Tasche (2) zum Halten eines viskosen Produkts (3) aufweist, mit einer konischen, zum Öffnen durch Abschneiden bestimmten Spitze, sowie einer zum Ausfliessen und zur Formgebung des Streifens (5) dienenden Hülse (4), dadurch gekennzeichnet, dass die Hülse (4) innerhalb der Spitze der Tasche (2) angeordnet ist, und dass sie mit Hilfe von Festhaltemitteln (7) in der genannten Spitze am Ort gehalten wird.

2. Gegenstand zum Bearbeiten von viskosen Produkten nach Anspruch 1, dadurch gekennzeichnet, dass die Tasche (2) ein konisches Profil aufweist, und dass die Hülse (4) in der Spitze des Konus' angeordnet ist.

3. Gegenstand zum Bearbeiten von viskosen Produkten nach Anspruch 1, dadurch gekennzeichnet, dass das Innere der Spitze der Tasche (2) mit der Aussenseite der Hülse (4) in Kontakt ist, um den Bereich zwischen der Hülse und der Tasche hermetisch zu verschliessen.

4. Gegenstand zum Bearbeiten von viskosen Produkten nach Anspruch 3, dadurch gekennzeichnet, dass die Festhaltemittel (7) aus einer am Umfang der Hülse (4) angebrachten Verbindungsschweissnaht bestehen um diese an der Wandung der Tasche (2) zu befestigen.

5. Gegenstand zum Bearbeiten von viskosen Produkten nach Anspruch 1, dadurch gekennzeichnet, dass die Festhaltemittel (7) sich ausserhalb der Tasche (2) befinden.

6. Gegenstand zum Bearbeiten von viskosen Produkten nach Anspruch 5, dadurch gekennzeichnet, dass die Festhaltemittel (7) als elastischer torischer Kragen (9) ausgebildet sind, der mit einer Nut (10) in der Aussenfläche der Hülse (4) zusammenarbeitet.

**Claims**

1. An article for conditioning of viscous products, which may in particular find its application in cooking for containing food products such as mayonnaise, cream, sauce or other, destinated to be utilised in decorative stripes, said article comprising a flexible sealed bag (2) for retaining the viscous product (3) comprising a conical end destinated to be opened by cutting, a sleeve (4) destinated for outflow and forming of the stripe (5), characterized in that the sleeve (4) is placed at the interior of the end of the bag (2) and in that it is maintained in place in said end by a fixation means (7).

2. The article for conditioning of viscous products according to claim 1, characterized in that the bag (2) has a conical profile, and the sleeve (4) is situated at the end of the cone.

3. The article for conditioning of viscous products according to claim 1, characterized in that the interior of the end of the bag is in contact with the exterior of the sleeve (4), in order to hermetically close the space between the sleeve and the bag.

4. The article for conditioning of viscous products according to claim 3, characterized in that the fixation means (7) is presented in form of a connection welding which is located at the periphery of the sleeve (4) in order to fixe it on the wall of the bag (2).

5. The article for conditioning of viscous products according to claim 1, characterized in that the fixation means (7) is located outside of the bag (2).

6. The article for conditioning of viscous products according to claim 5, characterized in that the fixation means (7) is presented in the form of an elastic toric collar (9) which cooperates with a groove (10) which is formed on the outer surface of the sleeve (4).

# FIG.1

# FIG.2

# FIG.3

# FIG.4